# FASCICULE DE BREVET EUROPEEN

(11) **EP 1 064 159 B1**
(45) Date de publication et mention de la délivrance du brevet: **22.01.2003**
(21) Numéro de dépôt: 99910333.6
(22) Date de dépôt: 08.03.1999
(51) Int. Cl.: B60C 15/06

(54) **BOURRELET RENFORCE DE PNEUMATIQUE RADIAL**
VERSTÄRKTER WULST FÜR RADIALEN REIFEN
RADIAL TYRE REINFORCED BEAD

(30) Priorité: 20.03.1998 FR 9803570
(43) Date de publication de la demande: 03.01.2001
(73) Titulaire: COMPAGNIE GENERALE DES ETABLISSEMENTS MICHELIN-MICHELIN & CIE, 63040 Clermont-Ferrand Cédex (FR)
(72) Inventeur: CORSI, Patrick, F-63260 Thuret (FR)
(74) Mandataire: Diernaz, Christian
(86) Numéro de dépôt international: EP9901470
(87) Numéro de publication internationale: WO99048709

(56) Documents cités:
- EP-A- 0 202 925
- EP-A- 0 251 145
- FR-A- 1 594 780
- FR-A- 2 730 190
- GB-A- 2 035 228
- US-A- 4 699 194
- PATENT ABSTRACTS OF JAPAN vol. 011, no. 360 (M-645), 25 novembre 1987 & JP 62 137207 A (BRIDGESTONE CORP), 20 juin 1987

## Description

La présente invention concerne un pneumatique à armature de carcasse radiale, et plus particulièrement à un pneumatique "Poids Lourds", destiné à équiper des véhicules tels que les camions, tracteurs routiers, autobus, remorques et autres, et dans lequel une nouvelle structure de renforcement des bourrelets est adaptée en vue de l'amélioration de l'endurance desdits bourrelets.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de câbles métalliques orientés à un faible angle par rapport à la direction circonférentielle.

Dans le cas de la présence d'une seule nappe de renforcement de bourrelet, cette dernière peut être située le long du retournement d'armature de carcasse avec une extrémité radialement supérieure située au dessus ou au dessous de l'extrémité radialement supérieure du retournement d'armature de carcasse. Quant à l'extrémité radialement inférieure d'une telle nappe, elle est généralement située soit sur une droite parallèle à l'axe de rotation et passant approximativement par le centre de gravité de la section méridienne de la tringle d'ancrage de l'armature de carcasse, dans le cas d'un pneumatique possédant des bourrelets destinés à être montés sur des sièges de jante inclinés à 15° ± 2°, soit sur une droite parallèle à l'axe de rotation passant par un point situé entre le centre de gravité de la section méridienne de la tringle d'ancrage et le point de largeur axiale maximale de l'armature de carcasse, dans le cas de pneumatique possédant des bourrelets destinés à être montés sur des sièges de jante inclinés à 0° ou à 5° ± 1°. Dans ce deuxième cas, la nappe de renforcement du bourrelet est alors enroulée autour de la tringle, de sorte à présenter un brin axialement extérieur et un brin axialement intérieur, l'extrémité radialement supérieure du brin axialement intérieur étant généralement située au dessous de l'extrémité radialement supérieure du brin axialement extérieur.

La solution connue a pour but d'éviter la déradialisation des câbles du retournement de l'armature de carcasse, ainsi que de minimiser les déformations radiales et circonférentielles subies par l'extrémité dudit retournement, et par la couche de caoutchouc extérieure recouvrant le bourrelet et assurant la liaison avec la jante.

Dans d'autres cas, la nappe de renforcement métallique a été remplacée par plusieurs nappes, textiles par exemple, situées axialement soit du même côté du retournement, soit de part et d'autre dudit retournement, soit encore en partie le long du retournement et en partie le long de l'armature de carcasse. Une autre variante consiste à mettre deux nappes de renforcement le long du retournement, de part et d'autre dudit retournement, et une troisième nappe le long de l'armature de carcasse axialement à l'extérieur.

L'endurance des bourrelets peut aussi être améliorée en disposant le long de l'armature de carcasse deux nappes de renforcement, alors que le retournement de ladite armature n'est pas renforcée.

La durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets, et plus particulièrement des pneumatiques soumis à des roulages prolongés, roulages induisant souvent une température élevée des bourrelets, du fait des températures atteintes par les jantes de montage.

A la lecture de la demande française FR 2 730 190, ladite amélioration peut être obtenue par la présence dans les bourrelets d'au moins une nappe de renforcement formée d'éléments métalliques circonférentiels, enroulée autour de la tringle, à l'extérieur de la partie enroulée de l'armature de carcasse, de sorte que les extrémités [radialement supérieures] respectivement du brin axialement extérieur et radialement supérieure du brin axialement intérieur soient radialement situées au dessus d'une droite parallèle à l'axe de rotation et passant par le point de la tringle le plus éloigné dudit axe de rotation. L'armature de carcasse, formée de fils ou câbles radiaux, est ainsi, au niveau de sa surface de contact avec la tringle, formée, comme connu, d'éléments sensiblement circonférentiels qui sont généralement métalliques sous forme de fils, câbles, rubans ou feuillards enroulés, insérée entre lesdits éléments à orientation sensiblement circonférentielle et la nappe additionnelle d'éléments métalliques, eux aussi circonférentiels. Cette structure permet ainsi la reprise des efforts de tension subis par l'armature de carcasse, et ainsi minimise toutes les déformations en extrémités de retournement d'armature de carcasse, quelles que soient les conditions de roulage.

La même demande FR 2 730 190 décrit une variante avantageuse pour renforcer le bourrelet, consistant en ce que l'extrémité du brin axialement intérieur de la nappe d'éléments circonférentiels soit recouverte d'une nappe de renfort (9), constituée de câbles métalliques radiaux.

Le brevet FR 1 594 780, dans le but d'obtenir un raidissement plus efficace des bourrelets et des parties basses des flancs d'un pneumatique à armature de carcasse radiale, propose que les armatures de renforcement de bourrelets, situées axialement à l'extérieur de la partie principale de l'armature de carcasse et axialement à l'intérieur du retournement de la dite armature, soient constituées d'éléments de renforcement radiaux.

La demande EP 0 202 925, correspondant au préambule de le revendication 1, en vue d'améliorer l'endurance de bourrelets de pneumatiques radiaux pour véhicules lourds, propose aussi l'utilisation de deux armatures additionnelles de renforcement de bourrelets, une première armature étant constituée d'éléments métalliques et une deuxième armature d'éléments inclinés par rapport à la direction méridienne , le positionnement radial des extrémités radiales des dites armatures étant précisé.

L'invention propose une autre solution, techniquement et industriellement optimale pour des pneumatiques ayant des bourrelets destinés à être montés sur des jantes dites plates ou ayant des sièges inclinés à 5°.

Afin d'améliorer l'endurance d'un pneumatique appelé à porter de lourdes charges, ledit pneumatique, conforme à l'invention, comprenant au moins une armature de carcasse radiale, formée d'au moins une nappe d'éléments de renforcement inextensibles et ancrée dans chaque bourrelet B à une tringle pour former un retournement dont l'extrémité est situé à une distance radiale H_{RNC} de la base de bourrelet, chaque bourrelet étant renforcé par au moins deux armatures additionnelles de renforcement, au moins une première armature formée d'une seule nappe d'éléments de renforcement métalliques inextensibles radiaux, enroulée autour de la tringle d'ancrage de l'armature de carcasse, à l'extérieur de ladite armature de carcasse, pour former deux brins de sorte que l'extrémité radialement supérieure du brin axialement extérieur soit radialement située à une distance H_{LE} de la base du bourrelet, au moins égale à 65% de la distance H_{RNC,} et au moins une deuxième armature non enroulée autour de ladite tringle d'ancrage, caractérisé en ce que, vue en section méridienne, la deuxième armature additionnelle de renforcement de bourrelet est formée d'au moins une nappe d'éléments de renforcement métalliques circonférentiels, qui sont des tronçons ou des ensembles de tronçons de câbles métalliques de longueur circonférentielle inférieure à la longueur circonférentielle de l'axe moyen de la tringle.

Des éléments de renforcement seront considérés comme radiaux, si l'angle qu'ils font avec la direction circonférentielle du pneumatique est compris dans un intervalle 80°-100°.

Il faut entendre par armature enroulée autour de la tringle une armature formant deux brins axialement intérieur et extérieur dont les extrémités respectives sont situées radialement au dessus d'une droite parallèle à l'axe de rotation passant par le centre de gravité de la section transversale de la tringle d'ancrage.

De même, il faut entendre, dans le cadre de l'invention, par extrémité radialement supérieure du brin d'une armature de renforcement de bourrelet, qui peut être constituée d'une ou plusieurs nappes, l'extrémité de nappe d'armature la plus éloignée de l'axe de rotation, les nappes d'armature pouvant avoir des extrémités supérieures comprises dans un intervalle de distance radiale au plus égale à 20 mm. De même, l'extrémité radialement inférieure d'une armature de renforcement de bourrelet sera l'extrémité inférieure de nappe la moins éloignée de l'axe de rotation.

La première armature d'éléments de renforcement radiaux a préférentiellement l'extrémité du brin axialement intérieur située entre la droite parallèle à l'axe de rotation et passant par le centre de gravité de la section transversale de la tringle et la droite parallèle audit axe de rotation et passant par le point de largeur axiale maximale de l'armature de carcasse. L'extrémité radialement supérieure du brin axialement extérieur est alors de préférence située à une distance radiale de la base du bourrelet comprise entre 65% et 95% de la distance H_{RNC}, séparant l'extrémité du retournement d'armature de carcasse de ladite base.

La deuxième armature, qu'elle soit textile ou métallique est avantageusement disposée soit axialement à l'intérieur soit axialement à l'extérieur de la partie non retournée de l'armature de carcasse, en ayant une extrémité radialement supérieure plus proche de l'axe de rotation que ne l'est l'extrémité supérieure du brin axialement intérieur de l'armature d'éléments radiaux.

Lorsqu'elle est disposée axialement à l'intérieur de l'armature de carcasse, elle est préférentiellement entre ladite partie non retournée d'armature de carcasse et la première armature de renforcement d'éléments radiaux.
- Les caractéristiques de l'invention seront mieux comprises à l'aide de la description qui suit et qui se réfère au dessin, illustrant à titre non limitatif des exemples d'exécution, et sur lequel :
   - la figure 1 représente schématiquement un bourrelet ne correspondant pas à l'invention,
   - la figure 2 représente schématiquement un bourrelet conforme à l'invention, les tringles étant des tringles tressées et le bourrelet étant aminci.

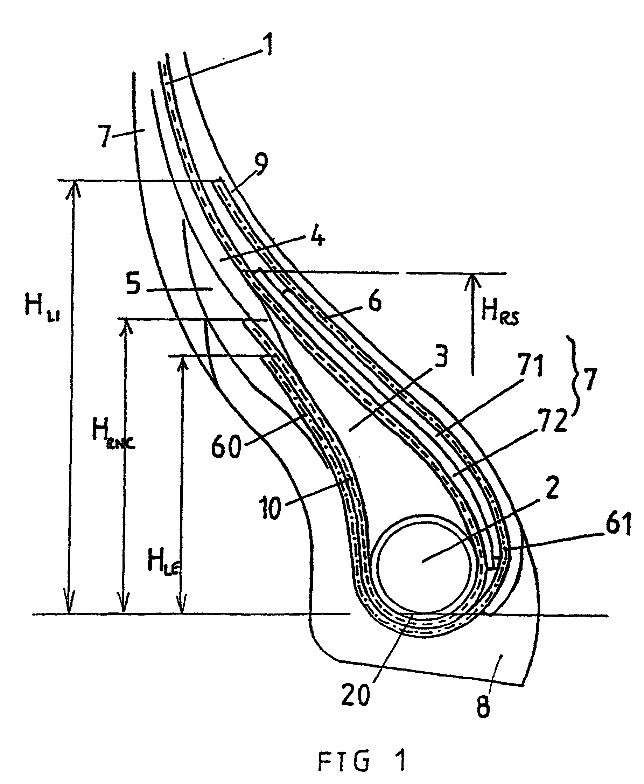

Le bourrelet B représenté sur la figure 1 et qui ne fait pas partie de l'invention, est celui d'un pneumatique 10.00-20 X, destiné à être monté sur une jante comportant des sièges de jante inclinés à 5°. Ledit bourrelet est renforcé par une tringle (2). Autour de ladite tringle (2) est ancrée une armature de carcasse (1) composée d'une seule nappe de câbles métalliques. L'ancrage se fait par un retournement (10) autour de la couche (20) de mélange caoutchouteux qui recouvre la tringle (2), la distance radiale H_{RNC} séparant l'extrémité radialement supérieure dudit retournement (10), de la base du bourrelet, ladite base étant par convention représentée par la droite parallèle à l'axe de rotation passant par le point de la tringle (2) le plus rapproché dudit axe de rotation, étant égale, dans l'exemple étudié du pneumatique de dimension 10.00-20, à 0,25 fois la hauteur H du pneumatique sur jante, cette dernière étant la distance radiale séparant le point du pneumatique radialement le plus éloigné de l'axe de rotation de la droite de mesure du diamètre nominal de la jante de montage, et égale à 270 mm. Entre l'armature de carcasse (1) et son retournement (10), radialement au dessus de la tringle (2), est disposé un premier bourrage de tringle (3) en mélange caoutchouteux de dureté Shore généralement élevée, ledit premier bourrage (3) étant prolongé radialement par un deuxième bourrage (4) en mélange caoutchouteux de dureté Shore moins élevée que la précédente et l'extrémité radialement supérieure dudit bourrage (4) étant sensiblement située au niveau de la largeur axiale maximale du pneumatique.

Axialement à l'intérieur de la partie non retournée de la nappe de carcasse (1) et, après retournement autour de la tringle (2), axialement à l'extérieur du retournement (10) de la nappe (1), est disposée une première armature de renforcement de bourrelet composée, dans l'exemple décrit, d'une seule nappe (6), de manière à former deux brins, un brin axialement intérieur (61) et un brin axialement extérieur (60). Les extrémités radialement supérieures respectivement des deux brins (61) et (60) sont situées par rapport à la base du bourrelet à des hauteurs H_{LI} et H_{LE} respectivement égales à 80 mm et 58 mm, la distance H_{LE} étant égale à 85% de la distance H_{RNC}. La nappe (6) de ladite première armature est formée de fils ou câbles métalliques orientés à 90° par rapport à la direction circonférentielle. Les deux extrémités respectivement du retournement de l'armature de carcasse et du brin axialement extérieur de la nappe de renforcement (6) sont axialement à l'extérieur recouverts par un troisième bourrage (5), dit de remplissage et prenant appui d'une part sur le deuxième bourrage de tringle (4) et sur les parties de nappes (60) et (10). Entre le brin axialement intérieur (61) de la nappe de renforcement de bourrelet (6) et la partie non retournée de la nappe de carcasse (1) est disposée une deuxième armature de renforcement de bourrelet (7), composée, dans l'exemple décrit, de deux nappes (71) et (72) de câbles textiles en polyamide aliphatique, parallèles entre eux dans chaque nappe et croisés d'une nappe (71) à la suivante (72) en formant avec la direction circonférentielle un angle de 45°, mesuré sur le pneumatique vulcanisé sur les bords radialement inférieurs des nappes (71) et (72) et aux erreurs de fabrication près, c'est-à-dire des angles compris dans l'intervalle 45° ± 1,5°. L'extrémité radialement supérieure de l'armature (7), qui est par convention l'extrémité radialement supérieure de la nappe (72), nappe dont l'extrémité est la plus éloignée de l'axe de rotation, est située à une distance radiale de la base du bourrelet H_{RS} égale à 55 mm, soit inférieure à la distance H_{LI} de l'extrémité radialement supérieure du brin axialement intérieur de la nappe de renforcement de bourrelet (6) d'au moins 33% de H_{LI}. L'extrémité supérieure de la deuxième nappe (71) de l'armature (7) est radialement en dessous de l'extrémité de la nappe (72), de 6 mm. Quant aux extrémités radialement inférieures des deux nappes (71) et (72), elles sont sensiblement à la même distance radiale de l'axe de rotation, et distantes de la base de bourrelet de quantités respectivement égales à 11 mm et 8 mm, c'est-à-dire très proches de la base du bourrelet.

La nappe (6) de ladite première armature de renforcement de bourrelet réprésentée sur la figure 1, et qui ne fait pas partie de l'invention peut être formée de câbles en matériau textile, par exemple en polyamide aliphatique, orientés à 90° par rapport à la direction circonférentielle. Ladite nappe (6) possède aussi deux brins, un brin axialement intérieur (61) et un brin axialement extérieur (60). L'extrémité radialement supérieure du brin (60) est alors située par rapport à la base du bourrelet à une hauteur H_{LE} égale à 75 mm.

La majeure partie du bourrelet B est, comme connu en soi, entouré d'un mélange caoutchouteux de protection (8), qui est axialement à l'intérieure prolongé radialement à l'extérieur par les couches usuelles de renforts caoutchouteux et intérieures (9), alors qu'il est axialement à l'extérieur prolongé radialement à l'extérieur par la couche de flanc (7).

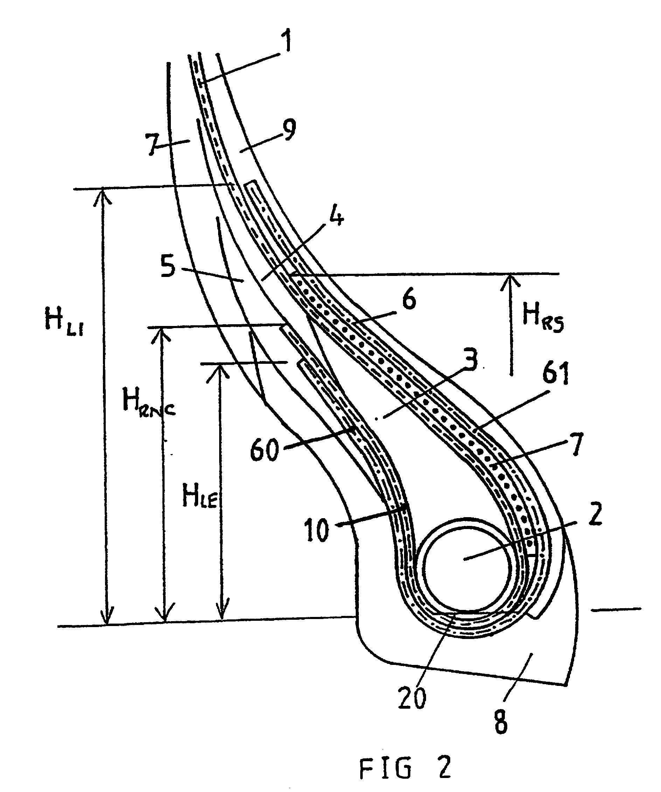

La structure de bourrelet montré sur la figure 2 diffère de celle décrite précédemment par le fait que la deuxième armature de renforcement de bourrelet est formée d'une nappe (7) d'éléments métalliques au lieu et place des deux nappes textiles de l'exemple précédent. Les dits éléments sont parallèles entre eux dans la nappe (7) et peuvent être circonférentiels, c'est-à-dire formant avec 1a direction circonférentielle un angle α égal à 0° aux erreurs de fabrication près, c'est-à-dire compris dans l'intervalle (- 1,5° ; + 1,5°). Les éléments peuvent alors être des câbles métalliques inextensibles, mais la fabrication du pneumatique sera cependant avantageusement facilitée par l'emploi, à titre d'éléments de renforcement, de câbles extensibles. Elle le sera encore plus par l'emploi de tronçons ou d'ensembles ou groupes de tronçons de câbles, de longueur circonférentielle comprise entre 0,2 et 0,4 fois la longueur circonférentielle de l'armature de renforcement, ce qui permet la pose de l'armature de renforcement de bourrelet sur le tambour de confection de l'ébauche crue d'armature de carcasse et la mise sous forme torique de la dite ébauche sans difficultés majeures, et ladite longueur moyenne étant mesurée à la pose sur ledit tambour de confection. Les interstices ou coupures circonférentielles entre éléments coupés seront préférentiellement décalés les uns par rapport aux autres. Les éléments de la nappe de la deuxième armature de renforcement (7) peuvent aussi former avec la direction circonférentielle un angle faible pouvant être, par exemple, égal à 22°; les éléments de renforcement étant alors des câbles inextensibles.

La présence combinée d'une armature de renforcement d'éléments radiaux enroulée autour de la tringle d'ancrage de l'armature de carcasse radiale et d'une armature de renforcement qui minimise la déradialisation de câbles radiaux de l'armature de carcasse, permet non seulement une baisse importante des sollicitations des mélanges de caoutchouc constituant le bourrelet plus particulièrement aux extrémités de nappes, mais aussi une amélioration de la résistance des câbles d'armature de carcasse à la fatigue.

## Revendications

1. Pneumatique, appelé à porter de lourdes charges, comprenant au moins une armature de carcasse radiale (1), formée d'au moins une nappe d'éléments de renforcement inextensibles et ancrée dans chaque bourrelet B à une tringle (2) pour former un retournement (10) dont l'extrémité est situé à une distance radiale H_{RNC} de la base de bourrelet, chaque bourrelet B étant renforcé par au moins deux armatures additionnelles de renforcement (6, 7), au moins une première armature (6) formée d'une seule nappe d'éléments de renforcement métalliques inextensibles radiaux, enroulée autour de la tringle d'ancrage de l'armature de carcasse, à l'extérieur de ladite armature de carcasse, pour former deux brins (60, 61) de sorte que l'extrémité radialement supérieure du brin axialement extérieur (60) soit radialement située à une distance H_{LE} de la base du bourrelet, au moins égale à 65% de la distance H_{RNC}, et au moins une deuxième armature (7) non enroulée autour de ladite tringle d'ancrage, **caractérisé en ce que**, vue en section méridienne, la deuxième armature additionnelle de renforcement de bourrelet est formée d'au moins une nappe (7) d'éléments de renforcement métalliques circonférentiels, qui sont des tronçons ou des ensembles de tronçons de câbles métalliques de longueur circonférentielle inférieure à la longueur circonférentielle de l'axe moyen de la tringle.

2. Pneumatique selon la revendication 1, **caractérisé en ce que** la deuxième armature (7) est disposée axialement à l'extérieur de la partie non retournée de l'armature de carcasse (1) en ayant une extrémité radialement supérieure plus proche de l'axe de rotation que ne l'est l'extrémité supérieure du brin axialement intérieur (61) de la première armature (6) d'éléments de renforcement radiaux et une extrémité radialement inférieure proche de la base du bourrelet.

3. Pneumatique selon la revendication 1, **caractérisé en ce que** la deuxième armature (7) est disposée axialement à l'intérieur de la partie non retournée de l'armature de carcasse (1), entre ladite partie non retournée d'armature de carcasse et la première armature de renforcement (6) d'éléments radiaux, en ayant une extrémité radialement supérieure plus proche de l'axe de rotation que ne l'est l'extrémité supérieure du brin axialement intérieur de l'armature d'éléments radiaux et une extrémité radialement inférieure proche de la base du bourrelet.

## Patentansprüche

1. Luftreifen bzw. Reifen, der dazu berufen ist, schwere Lasten zu tragen, und mindestens eine radiale Karkassenbewehrung (1) aufweist, die aus mindestens einer Lage von undehnbaren Verstärkungselementen gebildet und in jedem Wulst B an einem Wulstkern (2) verankert ist, um einen Umschlag (10) zu bilden, dessen Ende unter einem radialen Abstand H_{RNC} von der Unterseite des Wulstes gelegen ist, wobei jeder Wulst B durch mindestens zwei zusätzliche Verstärkungsbewehrungen (6, 7) verstärkt ist, mindestens eine erste Bewehrung (6), die aus einer einzigen Lage aus metallischen, undehnbaren, radialen Verstärkungselementen gebildet ist, die um den Verankerungs-Wulstkern der Karkassenbewehrung auf der Außenseite der genannten Karkassenbewehrung herumgeschlagen sind, um derart zwei Stücke (60, 61) zu bilden, daß das radial obere Ende des axial äußeren Stücks (60) radial in einem Abstand H_{LE} von der Unterseite des Wulstes gelegen ist, der mindestens gleich 65% des Abstandes H_{RNC} beträgt, und mindestens eine zweite Bewehrung (7), die um den Verankerungs-Wulstkern nicht herumgewickelt ist, **dadurch gekennzeichnet, daß**, im Meridianschnitt gesehen, die zweite zusätzliche Wulst-Verstärkungsbewehrung aus mindestens einer Lage (7) von metallischen Umfangs-Verstärkungselementen gebildet ist, die Stücke oder Gruppen von Stücken von Metallseilen mit einer Umfangslänge sind, die kleiner ist als die Umfangslänge der Mittelachse des Wulstkerns.

2. Reifen nach Anspruch 1, **dadurch gekennzeichnet, daß** die zweite Bewehrung (7) axial auf der Außenseite des nicht umgeschlagenen Teils der Karkassenbewehrung (1) angeordnet ist, indem sie ein radial oberes Ende aufweist, das der Drehachse näher liegt als das obere Ende des axial inneren Stücks (61) der ersten Bewehrung (6) aus radialen Verstärkungselementen, sowie ein radial unteres Ende nahe der Unterseite des Wulstes.

3. Reifen nach Anspruch 1, **dadurch gekennzeichnet, daß** die zweite Bewehrung (7) axial auf der Innenseite des nicht umgeschlagenen Teils der Karkassenbewehrung (1) zwischen dem genannten, nicht umgeschlagenen Teil der Karkassenbewehrung und der ersten Verstärkung (6) aus radialen Elementen angeordnet ist, indem sie ein radial oberes Ende aufweist, das näher an der Drehachse liegt als das obere Ende des axial inneren Stücks der Bewehrung aus radialen Elementen, sowie ein radial unteres Ende nahe der Unterseite des Wulstes.

## Claims

1. Tyre, designed to carry heavy loads, comprising at least one radial carcass reinforcement (1) formed of at least one ply of inextensible reinforcement elements and anchored in each tyre bead B to a bead wire (2), with a turn-up (10) whose end is located a radial distance H_{RNC} from the base of the bead, each bead B being reinforced by at least two additional reinforcement armatures (6, 7), at least one first armature (6) formed of a single ply of radial, inextensible metallic reinforcement elements wrapped around the anchoring bead wire of the carcass reinforcement and forming two parts (60, 61) such that the radially upper end of the axially outer part (60) is located radially a distance H_{LE} from the base of the bead equal to at least 65% of the distance H_{RNC}, and at least one second armature (7) not wrapped round the said anchoring bead wire,
**characterised in that**
when viewed in median section, the second additional bead reinforcement armature (7) is formed of at least one ply (7) of circumferential metallic reinforcing elements which are sections or bundles of sections of metallic cables whose circumferential length is smaller than the circumferential length of the median axis of the bead wire.

2. Tyre according to Claim 1,
**characterised in that**
the second armature (7) is arranged axially outside the part of the carcass reinforcement (1) not turned up, and has a radially upper end closer to the rotation axis than is the radially upper end of the axially inner part (61) of the first armature (6) of radial reinforcement elements and a radially lower end close to the base of the bead.

3. Tyre according to Claim 1,
**characterised in that**
the second armature (7) is arranged axially inside the part of the carcass reinforcement (1) not turned up, between the said unturned part of the carcass reinforcement and the first reinforcement armature (6) of radial elements, and has a radially upper end closer to the rotation axis than is the upper end of the axially inner part of the armature of radial elements and a radially lower end close to the base of the bead.
